# EUROPÄISCHE PATENTSCHRIFT

(11) **EP 0 887 281 B1**
(45) Veröffentlichungstag und Bekanntmachung des Hinweises auf die Patenterteilung: **26.03.2003**
(21) Anmeldenummer: 98110762.6
(22) Anmeldetag: 12.06.1998
(51) Int. Cl.: B65D 73/02, B23P 15/00

(54) **Verfahren zur Herstellung von metallischen Mikrobauteilen**
Method of manufacturing metallic micro components
Procédé de fabrication de microcomposants métalliques

(30) Priorität: 24.06.1997 DE 19726744
(43) Veröffentlichungstag der Anmeldung: 30.12.1998
(73) Patentinhaber: ROBERT BOSCH GMBH, 70442 Stuttgart (DE)
(72) Erfinder: Buehring, Juergen, 70469 Stuttgart (DE); Moersch, Gilbert, 70563 Stuttgart (DE); Koenig, Harald, 71272 Renningen (DE); Lehmann, Bernd, 79400 Kandern (DE)

(56) Entgegenhaltungen:
- DE-A- 4 141 775
- US-A- 4 125 441
- US-A- 5 207 887
- M.L. KNIFFIN ET AL: "Packaging for Silicon Micromachined Accelerometers" INTERNATIONAL JOURNAL OF MICROCIRCUITS AND ELECTRONIC PACKAGING., Bd. 19, Nr. 1, 1996, Seiten 75-86, XP000639470 INTERNATIONAL MICROELECTRONICS & PACKAGING SOCIETY., US ISSN: 1063-1674

## Beschreibung

Die Erfindung betrifft ein Verfahren zur Herstellung von metallischen Mikrobauteilen mit den im Oberbegriff des Anspruchs 1 genannten Merkmalen.

### Stand der Technik

Es ist bekannt, metallische Mikrobauteile durch Abformen von einer Urform herzustellen, deren Formgebungs-Oberfläche durch Laserbearbeiten, feinmechanisches Bearbeiten, Galvanoformen oder Ätzen mit dreidimensionalen Mikrostrukturen versehen ist, die komplementär zu den Konturen der herzustellenden Mikrobauteile sind. Die Mikrobauteile werden beispielsweise durch galvanisches Abscheiden von Metall in die Mikrostrukturen dieser Urform gewonnen. Problematisch gestaltet sich die Entformung der sehr kleinen Mikrobauteile, da diese schlecht handhabbar sind und nur schwierig aus der Urform herausgelöst werden können. Zur Entformung ist es bekannt, die Mikrobauteile bei schwacher Adhäsion durch Magnetkraft aus den Mikrostrukturen der Urform herauszulösen, wenn die Mikrobauteile aus ferromagnetischen Stoffen bestehen. Alternativ können die Mikrobauteile bei schwacher Adhäsion mittels eines Vakuumgreifers entformt werden. Beide Entformungsmaßnahmen eignen sich jedoch nur zum Entformen von Mikrobauteilen, die mit relativ geringen Entformungskräften aus der Urform gelöst werden können. Wenn größere Entformungskräfte erforderlich sind, führen beide Entformungsmaßnahmen nicht zuverlässig zum Ziel.

### Vorteile der Erfindung

Das Verfahren mit den Merkmalen des Anspruchs 1 weist gegenüber bisherigen Entformungsmaßnahmen den Vorteil auf, daß die Mikrobauteile vor der Entformung in einen Polymerträger eingebettet werden, mit diesem also mechanisch derart innig verbunden werden, daß die Mikrobauteile beim Abziehen des Polymerträgers von der Urform im Polymerträger verbleiben und zusammen mit diesem unter Entformung aus den Mikrostrukturen von der Urform freikommen. Aufgrund der erfindungsgemäß vorgesehenen Einbindung der Mikrobauteile in den Polymerträger können problemlos auch solche Mikrobauteile aus den Mikrostrukturen der Urform entformt werden, die aufgrund ihrer Kontur hohe Entformungskräfte erfordern. Damit ist die erfindungsgemäße Entformungsmaßnahme den bisherigen Maßnahmen zur Entformung, die nur bei schwacher Adhäsion der Mikrobauteile erfolgreich eingesetzt werden können, überlegen. Die Erfindung bietet zudem den Vorteil, daß der Entformungsverbund aus Polymerträger und von diesem umschlossenen Mikrobauteil oder -bauteile eine eigenständige Baugruppe bildet, die eigenständig beispielsweise als Zwischenprodukt oder Endprodukt gehandhabt, d.h. bevorratet und zur bestimmungsgemäßen Nutzung der Mikrobauteile an einen entsprechenden Verarbeitungsort transportiert werden kann, wobei die Mikrobauteile in dem Polymerträger unverlierbar, wohlgeordnet und geschützt getragen sind. Außerdem ist das erfindungsgemäße Verfahren kostengünstig, weil die durch die Erfindung bereitgestellte Entformbarkeit auf der Verwendung eines Polymerträgers basiert, der äußerst kostengünstig herstellbar und zudem problemlos handhabbar ist.

Weitere vorteilhafte Ausgestaltungen der Erfindung sind den Unteransprüchen zu entnehmen.

In besonders vorteilhafter Weise wird auf der mikrostrukturierten Oberfläche der Urform vor dem Bilden der Mikrobauteile in den Mikrostrukturen eine Trennschicht gebildet, die sich jeweils so nahe bis zu den Formgebungs-Mikrostrukturen erstreckt, daß sie die in diesen gebildeten Mikrobauteile randseitig untergreift. Durch diesen Untergriff werden die Mikrobauteile beim Abziehen des Polymerträgers von der Urform sicher im Polymerträger zurückgehalten und damit problemlos auch bei starker Adhäsion entformt. Zudem stellt dieser Untergriff sicher, daß die Mikrobauteile bei der weiteren Handhabung der aus den Mikrobauteilen und dem Polymerträger bestehenden Baugruppe in dem Polymerträger sicher gehaltert werden, bis eine Abtrennung der Mikrobauteile zu deren Weiterverarbeitung gewünscht ist.

Zur Trennung der Mikrobauteile vom Polymerträger sind zwei Vorgehensweisen vorteilhaft: Zum einen können die Mikrobauteile durch chemisches Auflösen des Polymerträger von diesem getrennt werden, während zum anderen die Mikrobauteile nach Erwärmen des Polymerträgers bis zu dessen plastischem Zustand von diesem problemlos abgetrennt werden können.

Als Polymerträger eignen sich die solche Materialien, die in erstarrtem Zustand hinreichend zäh sind, um die Entformungskraft bereitzustellen, die zum Entformen der Mikrobauteile aus den Mikrostrukturen der Urform erforderlich ist. Besonders bevorzugt ist ein Polymethylmethacrylat als Material für den Polymerträger, der beispielsweise durch Heißprägen auf die die Mikrobauteile enthaltende Urform aufgebracht wird.

### Zeichnung

Die Erfindung wird anhand der folgenden Figuren näher erläutert.

Es zeigen:
- Figuren 1 bis 6: schematisch die Schrittabfolge des erfindungsgemäßen Verfahrens zur Herstellung von metallischen Mikrobauteilen, und
- Figur 7: schematisch eine durch das Verfahren gemäß den Figuren 1 bis 6 hergestellte Baugruppe aus Mikrobauteilen und dem diese enthaltenden Polymerträger.

### Beschreibung des Ausführungsbeispiels

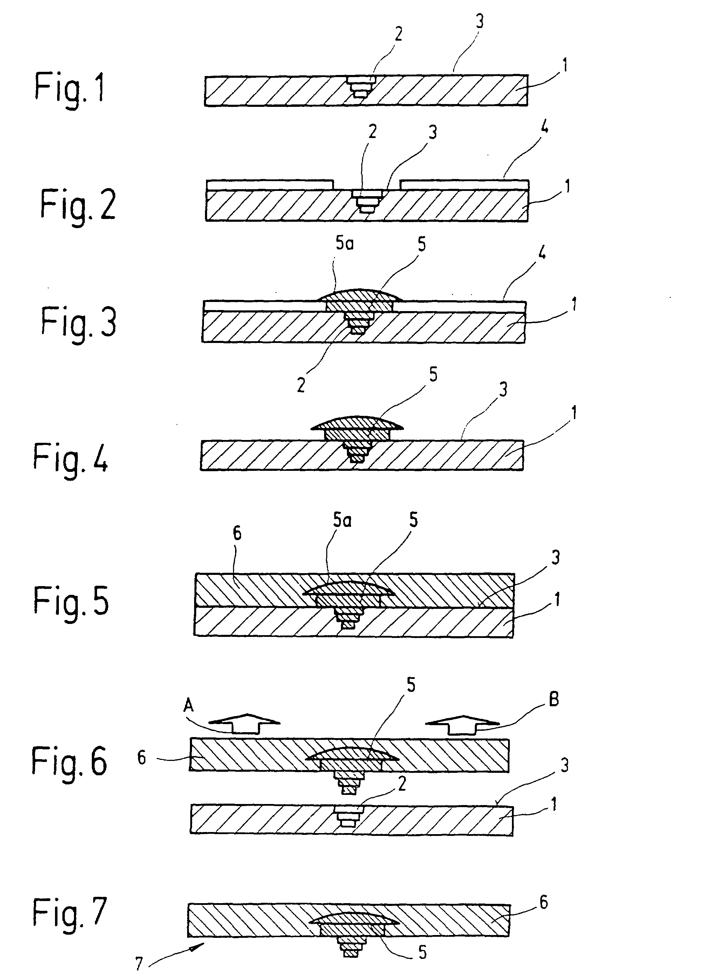

Figuren 1 bis 6 zeigen als schematische Querschnittsdarstellungen die Schrittabfolge eines Verfahrens zur Herstellung von metallischen Mikrobauteilen.

Wie in Figur 1 gezeigt, wird zunächst eine Primärform bzw. Urform 1 bereitgestellt. Diese Urform 1 besteht aus einer Metall- oder Keramikplatte, in die dreidimensionale Mikrostrukturen, von denen in den Figuren 1 bis 6 lediglich eine Mikrostruktur 2 gezeigt ist, eingebracht sind. Die dreidimensionalen Mikrostrukturen in der Urform 1 können beispielsweise durch Laserbearbeitung, durch feinmechanisches Bearbeiten, durch Galvanoformen oder durch Ätztechnik in die Formgebungs-Oberfläche 3 der Urform 1 eingebracht werden.

Wie in Figur 2 gezeigt, wird folgend auf die Strukturierung der Urform 1 deren Oberfläche 3, in welche die Mikrostrukturen 2 münden, mit einer Trennschicht 4 beschichtet, die beispielsweise aus einem Photoresist besteht und/oder durch Siebdruck auf die Oberseite 3 aufgebracht wird, und zwar unter Freilassen der Mikrostrukturen 2; d.h. die Trennschicht 4 ist im unmittelbaren Bereich der Mikrostrukturen 2 perforiert, um diese Mikrostrukturen 2 freizulassen. Diese Perforation der Trennschicht 4 läßt sich durch gekannte Maskierungstechniken erzielen.

Wie in Figur 3 gezeigt, wird als nächster Schritt des Verfahrens Metall in die Mikrostrukturen 2 abgeschieden, beispielsweise durch galvanisches Abscheiden. Die Abscheidung des Metalls erfolgt derart, daß die Mikrostrukturen 2 ebenso vollständig mit dem Metall ausgefüllt sind, wie die Perforationen in der Trennschicht 4, und die Mikrobauteile 5 weisen außerdem in der dargestellten Ausführungsform einen gewölbten Kopfteil 5a auf, der die Trennschicht 4 übergreift; d.h. die Mikrobauteile 5 sind in ihrem oberen Bereich hinterschnitten.

Wie in Figur 4 gezeigt, wird als nächstes die Trennschicht 4 vollständig, beispielsweise durch Ätzen entfernt, so daß die Mikrobauteile 5 nunmehr mit ihrem Kopfteil 5a frei über die Oberseite 3 der Urform 1 vorstehen.

Wie in Figur 5 gezeigt, erfolgt als nächster Verfahrensschritt das Einbetten der Mikrobauteile 5 in einen Polymerträger 6, der beispielsweise aus Polymethylmethacrylat besteht und durch Heißprägen auf die Oberseite 3 der Urform 1 aufgebracht wird. Die Dicke des Polymerträgers 6 ist so gewählt, daß er die Mikrobauteile 5 vollständig überdeckt, wobei der Polymerträger 6 über den Mikrobauteilen 5 eine vorbestimmte Dicke aufweist. Außerdem untergreift der Polymerträger 6 jedes Mikrobauteils 5 im Kopfbereich, wodurch ein besonders inniger Einschluß der Mikrobauteile 5 im Polymerträger 6 erzielt wird. Mit anderen Worten umgreift der Polymerträger 6 vollständig die Unterseite des Kopfteils 5a jedes Mikrobauteils 5.

Figur 6 zeigt den Abziehschritt des erfindungsgemäßen Verfahrens, demnach der Polymerträger 6 zusammen mit den in ihm eingebetteten Mikrobauteilen 5 unter deren Entformung aus der Urform 1 von dieser im wesentlichen senkrecht zur Oberfläche 3 abgezogen wird, wie durch Pfeile A, B gezeigt. Da der Kopfteil 5a jedes Mikrobauteils 5 auf seiner Unterseite von dem Polymerträger 6 untergriffen wird, ist auch im Fall einer sehr starken Adhäsion der Mikrobauteile in den Mikrostrukturen 2 der Urform 1 sichergestellt, daß die Mikrobauteile 5 problemlos und vollständig aus den Mikrostrukturen 2 entformt werden.

Figur 7 zeigt die aus den Mikrobauteilen 5 und den diese enthaltenden Polymerträger 6 bestehende Baugruppe 7, die als Zwischenprodukt bzw. Endprodukt weiter gehandhabt, z.B. bevorratet werden kann. Insbesondere können die Mikrobauteile 5 innerhalb des Polymerträgers 6 mit einem gegenseitigen Abstand so angeordnet sein, daß sie durch Ausrichten des Polymerträgers gegenüber einem nicht dargestellten weiteren Bauteil und Absenken gegenüber diesem Bauteil auf diesem gemeinsam bestimmungsgemäß angebracht werden können.

Die Mikrobauteile 5 können von dem Polymerträger 6 in unterschiedlicher Weise getrennt werden. Beispielsweise können die Mikrobauteile 5 durch chemisches Auflösen des Polymerträgers 6 von diesem getrennt werden. Alternativ hierzu können die Mikrobauteile 5 durch eine geeignete Greiferanordnung aus dem Polymerträger 6 entfernt werden, der zu diesem Zweck bis zum plastischen Zustand erwärmt wird. In beiden Fällen kann die Entnahme der Mikrobauteile 5 aus dem Polymerträger 6 automatisiert erfolgen.

## Patentansprüche

1. Verfahren zur Herstellung von metallischen Mikrobauteilen (5) durch Abformen von einer Urform (1), in deren Formgebungs-Oberfläche (3) Mikrostrukturen (2) eingebaut sind, **dadurch gekennzeichnet, daß** die in den Mikrostrukturen (2) der Urform (1) gebildeten und über die Oberfläche (3) vorstehenden Mikrobauteile (5) mit ihrem vorstehenden Teil (5a) zum Entformen in einen Polymerträger (6) eingebettet werden, der auf die Oberfläche (3) aufgebracht wird, und der Polymerträger (6) zusammen mit den Mikrobauteilen (5) von der Urform (1) abgezogen wird.

2. Verfahren nach Anspruch 1, **dadurch gekennzeichnet, daß** auf der Urform (1) vor dem Ausbilden der Mikrobauteile (5) unter Freilassen der Mikrostrukturen (2) eine Trennschicht (4) gebildet wird, die sich derart nahe bis an die Mikrostrukturen (2) erstreckt, daß sie die vorstehenden Teile (5a) der in diesen gebildeten Mikrobauteile (5) randseitig untergreift.

3. Verfahren nach Anspruch 1 oder 2, **dadurch gekennzeichnet, daß** die Trennschicht (4) aus einem Photoresist besteht.

4. Verfahren nach Anspruch 1, 2 oder 3, **dadurch gekennzeichnet, daß** der Polymerträger (6) durch Heißprägen auf die die Mikrobauteile (5) enthaltende Urform (1) aufgebracht wird.

5. Verfahren nach einem der Ansprüche 1 bis 4, **dadurch gekennzeichnet, daß** der Polymerträger (6) aus Polymethylmethacrylat besteht.

6. Verfahren nach einem der Ansprüche 1 bis 5, **dadurch gekennzeichnet, daß** die Mikrobauteile (5) durch chemisches Auflösen des Polymerträgers (6) von diesem getrennt werden.

7. Verfahren nach einem der Ansprüche 1 bis 5, **dadurch gekennzeichnet, daß** die Mikrobauteile (5) nach Erwärmen des Polymerträgers (6) bis zu dessen plastischen Zustand von diesem abgetrennt werden.

## Claims

1. Method of manufacturing metallic microcomponents (5) by taking an impression from a master pattern (1), in the shaping surface of which (3) microstructures (2) are incorporated, **characterized in that**, for demoulding purposes, the microcomponents (5) formed in the microstructures (2) of the master pattern (1) and projecting above the surface (3) are embedded with their projecting part (5a) into a polymer support (6), which is applied to the surface (3), and the polymer support (3) is pulled off together with the microcomponents (5) from the master pattern (1).

2. Method according to Claim 1, **characterized in that**, before the forming of the microcomponents (5), a release layer (4) is formed on the master pattern (1), leaving the microstructures (2) free, said release layer extending so close up to the microstructure (2) that at the edges it reaches under the projecting parts (5a) of the microcomponents (5) formed in them.

3. Method according to Claim 1 or 2, **characterized in that** the release layer (4) comprises a photoresist.

4. Method according to Claim 1, 2 or 3, **characterized in that** the polymer support (6) is applied to the master pattern (1) containing the microcomponents (5) by hot embossing.

5. Method according to one of Claims 1 to 4, **characterized in that** the polymer support (6) comprises polymethyl methacrylate.

6. Method according to one of Claims 1 to 5, **characterized in that** the microcomponents (5) are released from the polymer support (6) by chemically dissolving the latter.

7. Method according to one of Claims 1 to 5, **characterized in that** the microcomponents (5) are released from the polymer support (6) after heating the latter until it is in its plastic state.

## Revendications

1. Procédé de fabrication de microcomposants métalliques (5) par moulage dans une forme de base (1) dont la surface supérieure (3) de moulage comporte des microstructures (2),
**caractérisé en ce que**
les microcomposants (5) formés dans les microstructures (2) de la forme de base (1) et qui sont en saillie par rapport à la surface (3), sont intégrés par leur partie en saillie (5a) dans un support en polymère (6) pour le démoulage, ce support étant appliqué sur la surface supérieure (3) et le support en polymère (6) avec les microcomposants (5) s'enlève de la forme de base (1).

2. Procédé de fabrication de microcomposants métalliques selon la revendication 1,
**caractérisé en ce qu'**
avant de réaliser les microcomposants (5) sur la forme de base (1), on réalise une couche de séparation (4) en laissant libres les microstructures (2), cette couche de séparation s'étendant jusqu'à proximité des microstructures (2), et cette couche vient prendre sous le bord des parties en saillie (5a) des microcomposants (5) formés dans ces microstructures.

3. Procédé de fabrication de microcomposants métalliques selon les revendications 1 ou 2,
**caractérisé en ce que**
la couche de séparation (4) est un photorésist.

4. Procédé de fabrication de microcomposants métalliques selon les revendications 1, 2 ou 3,
**caractérisé en ce que**
le support de polymère (6) est appliqué par impression à chaud sur la forme de base (1) comportant les microcomposants (5).

5. Procédé de fabrication de microcomposants métalliques selon l'une des revendications 1 à 4,
**caractérisé en ce que**
le support de polymère (6) est en polyméthylméthacrylate.

6. Procédé de fabrication de microcomposants métalliques selon l'une des revendications 1 à 5,
**caractérisé en ce que**
les microcomposants (5) sont séparés du support de polymère (6) par dissolution chimique.

7. Procédé de fabrication de microcomposants métalliques selon l'une des revendications 1 à 5,
**caractérisé en ce que**
les microcomposants (5) sont séparés par chauffage du support en polymère (6) à son état plastique.
